Europäisches Patentamt

European Patent Office

Office européen des brevets

(11) Publication number: **0 074 824**
**B1**

(12) **EUROPEAN PATENT SPECIFICATION**

(45) Date of publication of patent specification: **07.01.88**

(51) Int. Cl.⁴: **H 04 N 9/75**

(21) Application number: **82304786.5**

(22) Date of filing: **10.09.82**

(54) **Chromakey apparatus.**

(30) Priority: **12.09.81 JP 144535/81**

(43) Date of publication of application:
**23.03.83 Bulletin 83/12**

(45) Publication of the grant of the patent:
**07.01.88 Bulletin 88/01**

(84) Designated Contracting States:
**AT DE FR GB NL**

(56) References cited:
**EP-A-0 024 973**
**US-A-3 678 182**

(73) Proprietor: **SONY CORPORATION**
**7-35 Kitashinagawa 6-Chome Shinagawa-ku**
**Tokyo 141 (JP)**

(72) Inventor: **Yamamoto, Kaichi**
**1-5599-39, Hibarigaoka**
**Zama-shi Kanagawa-ken (JP)**
Inventor: **Yonemitsu, Jun**
**4-13-1, Asahi-cho**
**Atsugi-shi Kanagawa-ken (JP)**

(74) Representative: **Haigh, Charles Roy et al**
**J.A. KEMP & CO. 14 South Square Gray's Inn**
**London WC1R 5EU (GB)**

Courier Press, Leamington Spa, England.

## Description

The present invention relates to a chromakey system and more particularly to a key signal generating apparatus for a digital chromakey apparatus.

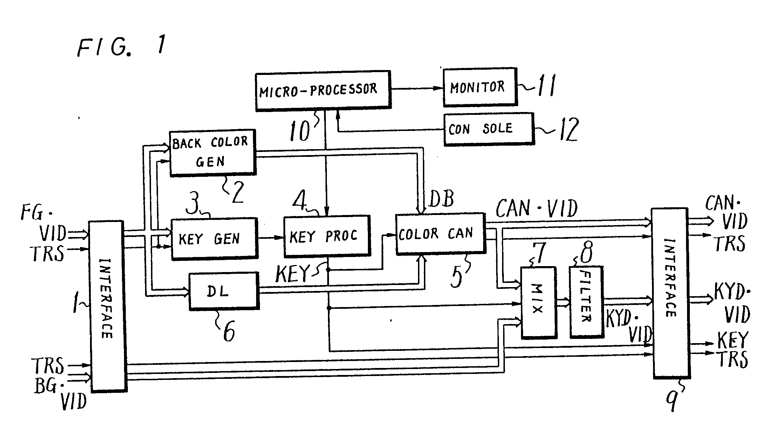

Fig. 1 of the accompanying drawings is a block diagram showing the overall arrangement of a digital chromakey apparatus to which this invention is applicable. In the figure, reference 1 denotes an interface to which are supplied a foreground color video data signal FG. VID and a background color video data signal BG. VID, each with a timing reference signal TRS. The above color video data signals FG. VID and BG. VID are formed of respective components provided by sampling a luminance signal Y and color difference signals U and V, each of which is formed by matrix calculation of output signals R, G and B from a color television camera, in the sampling frequency ratio of, for instance, 14:7:7. The interface 1 takes the timing signals (horizontal sync. signal, vertical sync. signal and the like) decoded from the respective timing reference signals TRS into consideration, then makes the phases of two color video data signals FG. VID and BG. VID appropriate, and then delivers the same to the next stage.

Reference 2 denotes a back color data generator which forms back color data from the foreground color video data FG. VID and supplies the same to a key signal generator 3 and a color canceller 5.

The key signal generator 3 compares the back color data signal with the foreground color video data signal FG. VID at each pair of corresponding samples thereof to allow the generation of a key signal with a predetermined level. Since the key signal per se thus developed has so much external disturbances, it can not be utilized as it is or immediately. Therefore, as will be discussed later, the key signal is supplied to a key processor 4, whereby it is subjected to waveform shaping processes such as clipping, adjustment of edge timings of this clipped output, adjustment of gain and the like. Thus the key processor 4 produces a key signal KEY.

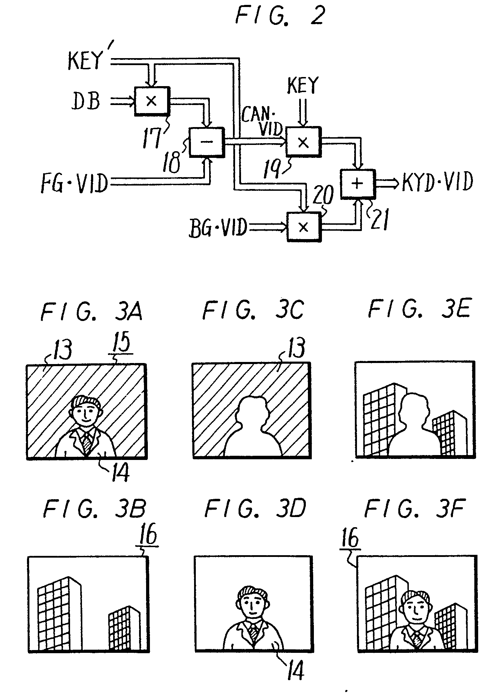

The color canceller 5 eliminates the back color from the foreground color video data signal FG. VID on the basis of the above key signal KEY. For instance, when an object 14 (Figs. 3A to 3D) is transparent, the transparent back color is removed. To be more concrete, the back color data is amplitude-modulated by the key signal KEY so as to subtract the modulated output from the foreground color video data signal FG. VID. The elimination of the back color is intended for only the color difference signals U and V, while the luminance signal Y is merely passed through the color canceller 5.

The color canceller 5 is supplied with the foreground color video data signal FG. VID by way of a delay circuit 6. The delay circuit 6 has a delay time corresponding to the time needed by the key processor 4 in its waveform shaping processes mentioned before.

An output CAN. VID of the color canceller 5 and the background color video data signal BG. VID are supplied to a mixer 7, in which they are mixed on the basis of the key signal KEY applied thereto. Other than the method of simply switching between the two color video data signals CAN. VID and BG. VID, the above mixing operation can use the so-called cross fade method in which at the key boundary, the level of one data signal is gradually decreased, while the level of the other data signal is gradually increased. The output of the mixer 7 is supplied through a digital filter 8 to an interface 9. The digital filter 8 serves to shape the waveform of the output derived from the mixer 7.

The interface 9 permits the color video data signal CAN. VID, the colors of which are removed and derived from the color canceller 5, the mixed color video data signal KYD. VID from the digital filter 8, the respective timing reference signals TRS and the key signal KEY to be delivered to the outside.

In addition, a microprocessor 10, a CRT (cathode ray tube) monitor 11 and a console 12 are provided, in which the translation of user key input from the console 12, the input of the above translation into the system, the calculation processes required by respective circuit blocks and the like are possible.

The aforesaid digital chromakey apparatus operates using a sampling clock with a frequency corresponding to the sampling rate of the color difference data signals.

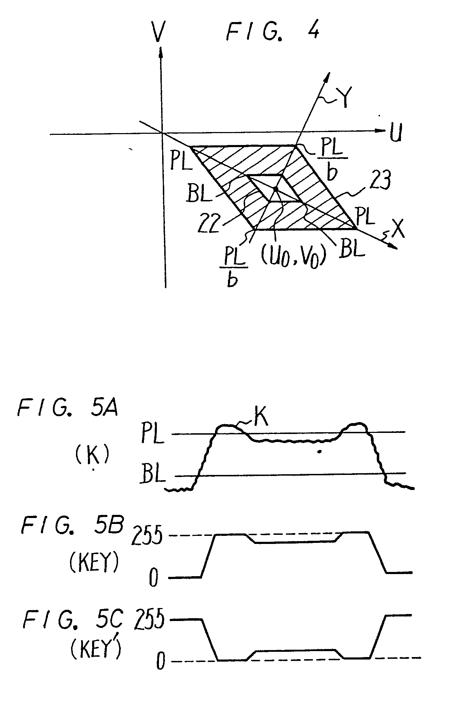

Fig. 2 shows in block form the principle of the color canceller 5 and mixer 7 controlled by the use of the key signal KEY. Taking the key signal KEY shown in Fig. 5B as an example, the key signal KEY is converted to the key signal KEY' shown in Fig. 5C. This key signal KEY' is supplied to a multiplier 17 so as to modulate the back color signal DB derived from the back color data generator 2 (Fig. 1). The output of the multiplier 17 is supplied to a subtractor 18 and thereby subtracted from the foreground color video data signal FG. VID. Thus the subtractor 18 derives the video data signal CAN. VID which is such that the data which corresponds with the object 14 and the background color of the object 14 are removed from the color video data signal FG. VID. The aforesaid operations are all performed by the color canceller 5 in Fig. 1.

Moreover, in a multiplier 19 the video data signal CAN. VID is modulated by the key signal KEY and in a multiplier 20 the background video data signal BG. VID is modulated by the key signal KEY'. Then, the outputs of both the multipliers 19 and 20 are added to each other by an adder 21. The output video data signal KYD. VID of the adder 21 produces a picture in which the background picture becomes transparent when the object 14 is transparent as described previously. Owing to the slope of the edge of the key signal KEY, at the boundary between the object 14 and the background 16, a cross fade is performed to cause the gradual switching of the pictures from one to another thus rendering the boundary of the pictures quite natural.

A conventional method for generating the key signal will be described with reference to Fig. 4. If a reference point corresponding to a background color is taken as $(U_0, V_0)$ in the U—V chroma signal coordinate plane as shown in Fig. 4, an axis connecting the origin with such reference point may be defined as the x-axis and the axis perpendicular to the x-axis and passing through the reference point $(U_0, V_0)$ may be defined as a y-axis. If components of a vector formed by connecting the reference point $(U_0, V_0)$ and a desired point U, V which components relate to the axes x and y are indicated by x and y, x and y can be expressed as

$$x=(U-U_0) \cos \theta + (V-V_0) \sin \theta$$

$$y=(V-V_0) \cos \theta - (U-U_0) \sin \theta$$

where

$$\theta = \tan^{-1}\left(\frac{V_0}{U_0}\right).$$

Therefore it is conventional to define a key signal by a function expressed as in the following equation

$$k = a|x| + b|y|$$

(a and b are desired positive constants).

If K in the left hand side is fixed at a constant value $K_0$, the values of the desired point U and V to satisfy the equation are arranged along the sides of a lozenge.

EP—A—24973 (Thompson CSF) discloses an apparatus in which two video signals are mixed in accordance with a key signal, the magnitude of the key signal being determined by a quadratic relationship which may be a circle or ellipse, between a reference hue and the hue of one of the video signals in chroma signal coordinates.

A soft keying operation will be described briefly with reference to Figs. 5A to 5C. When the foreground 15 where an object 14 of, for example, transparent glass is put in front of a back screen 13 is picked up, the background color is seen through the center of the glass so that as shown in Fig. 5A, a signal K is derived from the key signal generator 3, whose level is increased in association with the outline of the object 14 and is reduced at the center of the glass. Although Figs. 5A to 5C conveniently represent the key signal as an analog waveform for the sake of explanation, the key signal is digital data since the aforesaid digital chromakey apparatus in fact deals with the data as successive 8 bit samples.

A clipper (not shown) executes a clipping operation which takes a base clipping level BL and a peak clipping level PL as threshold levels thus generating the soft keying signal KEY as shown in Fig. 5b.

As stated above, in case of a transparent object 14, the soft keying operation is capable of generating a key signal corresponding satisfactorily to the background color as seen through the object 14 or to light reflected from the background screen 13 onto the object 14.

By the way, a locus drawn from the reference point $(U_0, V_0)$ to a position corresponding to a color of the object 14 is not generally presented as a straight line. This is mainly due to noise inherent in the color video data, and when such data is digitized, quantization noise is added thereto so that the zigzag movement of the aforesaid locus is intensified. Particularly when the color vector is towards one of the apexes of the lozenge in U—V chroma signal coordinates system as shown in Fig. 4 i.e. in the x-axis or y-axis direction, the inclined portions or slopes of the key signal do not smoothly vary due to the zigzag movement thereof, with the result that the picture quality of the mixed output picture is poor.

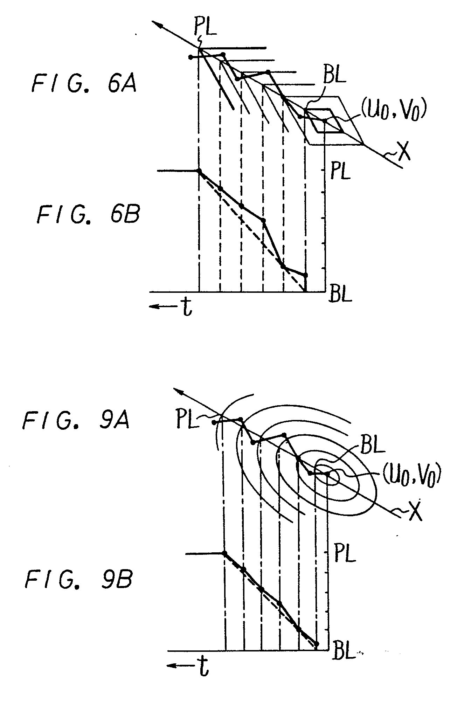

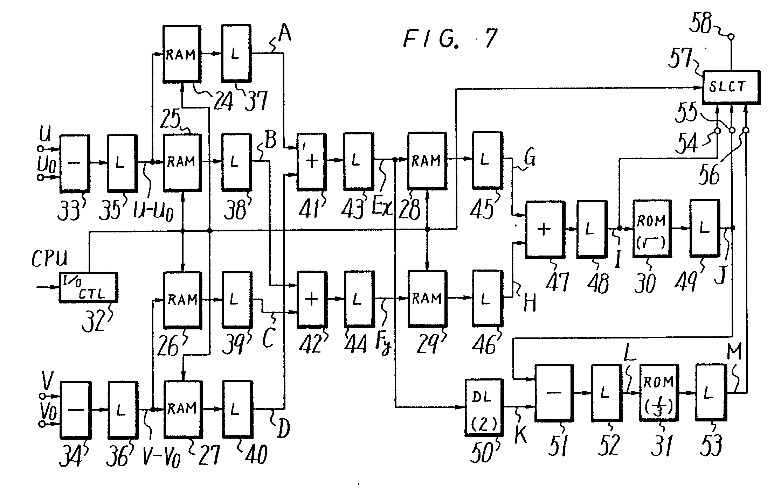

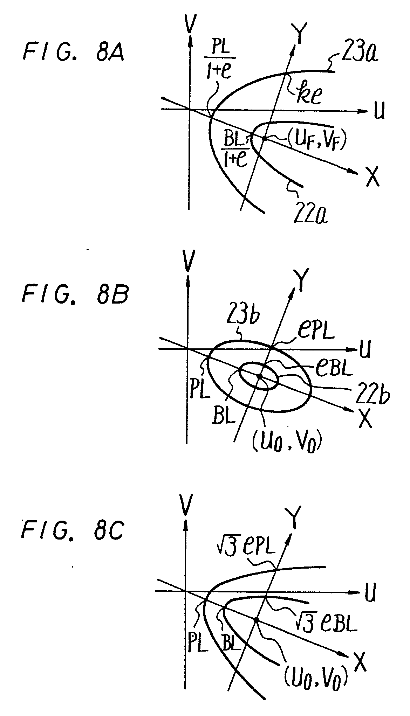

Let us assume that, as shown in Fig. 6A, there are 6 step changes of level which contain the base clipping level BL and the peak clipping level PL and that the locus is drawn along the axis x from the reference point $(U_0, V_0)$ to the position of the color of the object. Then, when there is no noise and the locus presents a straight line movement, the slopes of the key signal become straight lines as shown by the broken line in Fig. 6B. But when, as shown in Fig. 6A, the locus is caused by noise to form a zigzag, the slopes of the key signal are no longer straight lines and thus unevenness is produced as shown by the solid line in Fig. 6B.

Accordingly, an object of the invention is to provide an improved digital chromakey apparatus which can obviate or reduce the aforesaid defects inherent in the prior art digital chromakey apparatus. Another object of the invention is to provide a key signal generator which can make an edge of a key signal smooth. Still another object of the invention is to provide a key signal generator which includes means for allowing an edge portion of a key signal which has been disordered by noise to be approximated to a straight line.

According to the invention, there is provided chromakey apparatus arranged for mixing a first video signal with a second video signal in accordance with a key signal and including key signal generating means adapted to produce a key signal having a magnitude which is determined by a predetermined quadratic relationship with the distance between a reference hue and a hue of said first video signal said generating means comprising means for deriving from input hue point coordinate data of an input video data signal and reference hue point coordinate data first and second color difference coordinate data referred to respective axes of a rectangular coordinate system means for squaring said first and second colour difference coordinate data and summing the result so as to produce a summed output; characterized in that there are provided means for generating a square root of the summed output, means for multiplying said first and second colour difference coordinate data by cos θ and sin θ, respectively and adding the results so as to produce summed corrected data sin θ being the angle whose tangent is the second reference hue point coordinate data divided by the first reference hue point coordinate data; means for multiplying said summed corrected data by −e (e>o); and means for adding an output of said square root generating means with an output of said multiplying means, whereby an output of said last-mentioned adding means is said magnitude. Thus, in the invention, unlike the conventional straight line, contours formed by connecting points at the same level in U—V chromaticity coordinates to form edges of the key signal are produced as quadratic curves.

Other features of the invention are characterised in the sub claims.

The invention will be further described by way of non-limitative example with reference to the accompanying drawings in which like references designate the same elements and parts and in which:

Fig. 1 is a block diagram schematically showing the construction of a digital chromakey apparatus to which the invention is applicable;

Fig. 2 is a block diagram schematically showing in outline the construction of a color canceller and a mixer;

Figs. 3A to 3F are schematic diagrams useful for explaining the operation of the same;

Fig. 4 is a graph used to explain how a key signal is generated;

Figs. 5A to 5C are waveform diagrams used to explain the operation key processor;

Figs. 6A and 6B are graphs used to explain how a key signal is generated from a prior art key signal generator;

Fig. 7 is a block diagram schematically showing one embodiment of a chromakey apparatus according to the invention; and

Figs. 8A to 8C and Figs. 9A and 9B are graphs used to explain ways of how key signals are generated from a key signal generator, to which the invention is applied.

An embodiment of this invention will now be described. Fig. 7 shows the overall arrangement of a key signal generating apparatus to which this invention is applied. In the figure, numerals 24, 25, 26, 27, 28 and 29 respectively denote random access memories (hereinafter, simply referred to as RAMs), each being located to serve as a peripheral memory of a microcomputer. Data, address and control signals from a central processing unit (hereinafter, simply called a CPU) are supplied thereto by way of an I/O controller 32 and a predetermined map is stored in each of the RAMs 24, 25, 26, 27, 28 and 29. In other words, the modification of a reference point (reference hue $(U_0, V_0)$) and the kind of quadratic curve group which is in use renew or rewrite the data in each RAM.

As the quadratic curve group, any one of three kinds thereof shown in Figs. 8A to 8C may be employed. The first one is a polar coordinate quadratic curve system as shown in Fig. 8A, and the equation to produce a key signal is given by

$$K = r - ex \qquad (e > 0)$$

where

$$r = \sqrt{(U - U_0)^2 + (V - V_0)^2}$$

$$x = (U - U_0)\cos\theta + (V - V_0)\sin\theta$$

$$\theta = \tan^{-1}\left(\frac{V_0}{U_0}\right).$$

$(U_F, V_F)$ represent a focus of the quadratic curve.

Moreover, the peak clip level PL and the base clip level BL become quadratic curves which take the point $(U_F, V_F)$ as their focus and are expressed by

$$r = \frac{Ke}{1 - e\cos\theta}.$$

These quadratic curves become circles when $e \doteqdot 0$ is established, ellipses when $0 < e < 1$ is established, parabolas when $e = 1$ is established and hyperbolas when $e > 1$ is established. In Fig. 8A parabolas 22a and 23a are shown. The distance between the peak clip level PL and the base clip level BL is represented as a linear inclination.

The second group is an ellipse system as shown in Fig. 8B, and the key signal is generated by the following equation.

$$K\sqrt{\phantom{x}} = x^2 + \left(\frac{y}{e}\right)^2$$

where

$$x = (U - U_0)\cos\theta + (V - V_0)\sin\theta$$

$$y = (V - V_0)\cos\theta - (U - U_0)\sin\theta$$

$$\theta = \tan^{-1}\left(\frac{V_0}{U_0}\right).$$

The peak clip level PL and the base clip level BL on the U, V plane become ellipses 22a and 23b, each being expressed by the following equation taking the point $(U_0, V_0)$ as their center:

$$\frac{x^2}{k^2} + \frac{y^2}{(ek)^2} = 1.$$

The third group is a hyperbola system as shown in Fig. 8C, and the key signal is generated by the following equation:

$$K = \frac{-2x + \sqrt{x^2 + 3(y/e)^2}}{3}.$$

In this equation, x and y are the same as those of the above equation.

When $(U_0, V_0)$ become $(2k, 0)$, the peak clip level PL and the base clip level BL on the U, V plane become hyperbolas expressed as

$$\frac{x^2}{k^2} - \frac{y^2}{(ek)^2} = 1.$$

In the circuit arrangement shown in Fig. 7, the inputs of subtractors 33 and 34 receive a sample U and V of input video data and reference hue data $U_0$ and $V_0$ whereby respective subtracted outputs $(U-U_0)$ and $(V-V_0)$ are latched in latches 35 and 36, and then applied to the RAMs 24 to 27. In accordance with look-up tables previously written in the RAMs 24 to 27, output data A, B, C and D are generated therefrom and latched in latches 37, 38, 39 and 40. Calculations of (A+D) and (B+C) are carried out by adders 41 and 42, whose outputs are fed to latches 43 and 44 which then produce at their outputs added outputs $E_x$ and $F_y$, respectively.

These added outputs $E_x$ and $E_y$ are supplied to the RAMs 28 and 29 and output data G and H converted by the look-up tables previously written therein are produced at the outputs of latches 45 and 46. These outputs G and H are added by an adder 47 so that an output I(=G+H) is produced via a latch 48 at an output terminal 54. At this output terminal 54, there appears the signal formed by the first polar coordinate quadratic curve system.

The output I of the latch 48 is supplied to a read-only memory (hereinafter, called ROM) 30 for producing a square root and of which the output J is latched to a latch 49, and then produced at an output terminal 55. This output J is the key signal generated on the basis of the second ellipse system.

Moreover, the output $E_x$ of the latch 43 is supplied to a delay circuit 50 for phase-matching. An output k thereof is supplied to a subtractor 51, where it is subtracted from the output J of the latch 49 and a subtracted output L is produced via a latch 52. Since the delay circuit 50 also has the function of doubling the level of the data, the output L of the latch 52 becomes J−K=J−2E. This output L is multiplied by

$$\frac{1}{3}$$

by a ROM 31 so that an output

$$M(=\frac{1}{3}L)$$

is produced via a latch 53 and then delivered to an output terminal 56. This output M is the key signal generated on the basis of the hyperbola system mentioned before.

The outputs I, J and M produced at the aforesaid three output terminals 54, 55 and 56 are supplied to the input side of a selector 57, and the selector 57 is controlled by a control signal from the microcomputer to permit the key signal based upon a desired system to be produced at an output terminal 58.

In the case of the polar coordinate quadratic curve system, the output data B and C of the RAMs 25 and 26 become $(U-U_0)^2$ and $(V-V_0)^2$, respectively. Thus the data of these RAMs 25 and 26 are specified in such manner that the RAM 29 produces a square root of the added output F.

In accordance with the ellipse system and the hyperbola system, the RAMs 25 and 26 produce outputs $-(U-U_0) \sin \theta$ and $(V-V_0) \cos \theta$, respectively so that the output $F_x$ of the latch 44 becomes the added output, namely, the output y. In the case of the ellipse system, the RAM 28 forms $x^2$ and the RAM 29 forms

$$\frac{y^2}{e}$$

so that a square root of the added output of both data as described above is formed by the ROM 30.

In the case of the hyperbola system, the RAM 28 forms $x^2$ and the RAM 29 forms

$$H = 3\left(\frac{y}{e}\right)^2$$

so that the ROM 30 produces the output

$$J\left(=\sqrt{x^2 + 3\left(\frac{y}{e}\right)^2}\right)$$

of the square root of the added output therebetween. The delay circuit 50 generates K, equal to 2x, the subtractor 51 forms the subtracted output (L=J−K) therebetween, and this is further multiplied by the coefficient

$$\frac{1}{3}$$

by the ROM 31.

In one embodiment of this invention as described above, taking the case where the contours of the base clip level BL, the peak clip level PL and the slope therebetween are ellipses as an example, even if the movement from the reference hue to the object is a zigzag movement as shown in Fig. 9A, the inclination of the generated key signal is more linear as compared with that of the prior art, as is obvious from Fig. 9B. This is because this invention can reduce the level change amount of the key signal even though the hue of data in the sloping portion thereof varies in a different direction.

As is clear from the description of the aforementioned embodiment, in accordance with this invention, since the contour formed by connecting the points at which the level of the key signal is the same is defined by the quadratic curve, even if the data at the boundary portion between the back screen and the object contains noise, it is possible to reduce influence caused by such noise and form a key signal of which the slope or edge portion changes linearly. Thus a picture mixed by such key signal has a satisfactory outline.

While the embodiment of this invention has been described as applied to the U—V chroma signal coordinates, it is obvious that the present invention can be similarly applied to other I/Q chroma signal coordinates and so on.

**Claims**

1. Chromakey apparatus arranged for mixing a first video signal with a second video signal in accordance with a key signal and including key signal generating means adapted to produce a key signal having a magnitude which is determined by a predetermined quadratic relationship with the distance between a reference hue and a hue of said first video signal, said generating means comprising means (33, 34) for deriving from input hue point coordinate data (U, V) of an input video data signal and reference hue point coordinate data $(U_0, V_0)$, first and second colour difference coordinate data referred to respective axes of a rectangular coordinate system, means (25, 26, 42) for squaring said first and second colour difference coordinate data $(U-U_0, V-V_0)$ and summing the result so as to produce a summed output

$$((U-U_0)^2 + (V-V_0)^2);$$

characterized in that there are provided means (29) for generating a square root of the summed output

$$((U-U_0)^2 + (V-V_0)^2),$$

means (24, 27, 41) for multiplying said first and second colour difference coordinate data by $\cos \theta$ and $\sin \theta$, respectively and adding the results so as to produce summed corrected data

$$((U-U_0) \cos \theta + (V-V_0) \sin \theta),$$

$\theta$ being the angle whose tangent is the second reference hue point coordinate data divided by the first reference hue point coordinate data $(V_0/U_0)$; means (28) for multiplying said summed corrected data

$$((U-U_0) \cos \theta + (V-V_0) \sin \theta)$$

by $-e$ (e>0); and means (47) for adding an output of said square root generating means with an output of said multiplying means, whereby an output of said last-mentioned adding means is said magnitude.

2. A chromakey apparatus according to claim 1 characterized in that said generating means further comprises: means (25, 26, 42) for converting said $(U-U_0)$ and $(V-V_0)$ data into $-(U-U_0) \sin \theta$ and $(V-V_0) \cos \theta$ data and adding the same so as to produce an output

$$(V-V_0) \cos \theta - (U-U_0) \sin \theta$$

where

$$\theta = \tan^{-1}(V_0/U_0);$$

means (24, 27, 41) for converting said $(U-U_0)$ and $(V-V_0)$ data into

$$(U-U_0) \cos \theta \text{ and } (V-V_0) \sin \theta$$

data, respectively and adding the same so as to produce an output

$$(U-U_0) \cos \theta + (V-V_0) \sin \theta;$$

means (29) for multiplying said output

$$(V-V_0) \cos \theta - (U-U_0) \sin \theta$$

by 1/e and then squaring the same; means (28) for squaring said output

$$(U-U_0) \cos \theta + (V-V_0) \sin \theta;$$

means (47) for adding the output data of said multiplying means with the output data of said squaring means; and means (30) for generating a square root on the basis of said added output, whereby an output of said last mentioned means is said magnitude.

3. A chromakey apparatus according to claim 1 or 2 characterised in that said generating means further comprises: means (25, 26, 42) for converting said $(U-U_0)$ and $(V-V_0)$ data into data $-(U-U_0) \sin \theta$ and $(V-V_0) \cos \theta$ data and adding the same so as to produce an output

$$(V-V_0) \cos \theta - (U-U_0) \sin \theta$$

where

$$\theta = \tan^{-1}(V_0 - U_0);$$

means (24, 27, 41) for converting said $(U-U_0)$ and $(V-V_0)$ data into

$$(U-U_0) \cos \theta \text{ and } (V-V_0) \sin \theta$$

data, respectively, and adding the same so as to produce an output

$$(U-U_0) \cos \theta - (V-V_0) \sin \theta;$$

means (29) for multiplying an output of said first-mentioned converting means, squaring and multiplying the same by n times; means (28) for squaring an output of said second-mentioned converting means; means (47, 30) for adding an output of said multiplying means with an output of said squaring means so as to produce a square root; means (50) for multiplying an output of said second-mentioned converting means by −2 and adding the same with an output of said adding means (47, 30) and means (31) for multiplying an output of said last-mentioned multiplying means by 1/n, whereby an output of said multiplying means is said magnitude.

4. A chromakey apparatus according to claim 1, wherein said quadratic relationship is an ellipse.

5. A chromatic apparatus according to claim 1, wherein said quadratic relationship is a hyperbola.

6. A chromakey apparatus according to claim 1, wherein said quadratic relationship is a parabola.

7. A chromakey apparatus according to claim 1, wherein said quadratic relationship is a circle.

8. A chromakey apparatus according to any one of the preceding claims wherein the key signal generating means is adapted to produce key signals determined in accordance with a selectable one of a plurality of such quadratic relationships.

## Patentansprüche

1. Farbgesteuerte Schalteinrichtung zum Mischen eines ersten Videosignals mit einem zweiten Videosignal nach Maßgabe eines Schlüsselsignals

mit einer Einrichtung zur Erzeugung eines Schlüsselsignals, dessen Größe durch eine vorgegebene quadratische Funktion des Abstands zwischen einem Referenzfarbton und dem Farbton des ersten Videosignals bestimmt ist, wobei diese Einrichtung zur Erzeugung des Schlüsselsignals Mittel (33, 34) umfaßt, die aus den Koordinatendaten (U, V) des Eingangs-Farbtonpunkts eines Eingangs-Videodatensignals und den Koordinatendaten $(U_0, V_0)$ eines Referenz-Farbtonpunkts die Daten erster und zweiter, auf entsprechende Achsen eines rechtwinkligen Koordinatensystems bezogener Farbdifferenz-Koordinaten ableiten,

ferner mit einer Einrichtung (25, 25, 42) zum Quadrieren der ersten und zweiten Farbdifferenz-Koordinatendaten $(U-U_0, V-V_0)$ und zum Summieren der Ergebnisse, derart daß ein Summenausgangssignal

$$((U-U_0)^2+(V-V_0)^2)$$

ensteht,

gekennzeichnet durch

eine Quadriereinrichtung (29) zur Bildung der Quadratwurzel des genannten Summenausgangssignals

$$((U-U_0)^2+(V-V_0)^2),$$

eine Einrichtung (24, 27, 41) zum Multiplizieren der Daten der ersten und zweiten Farbdifferenz-Koordinaten mit dem Kosinus (cos θ) bzw. mit dem Sinus (sin θ) eines Winkels (θ), dessen Tangens dem Quotienten $(V_0/U_0)$ der Daten der zweiten Koordinaten des Referenz-Farbtonpunkts und der Daten der ersten Koordinaten des Referenz-Farbtonpunkts entspricht, sowie zum Addieren der Ergebnisse, derart daß korrigierte Summandaten

$$((U-U_0) \cos θ+(V-V_0) \sin θ)$$

gebildet werden,

eine Multipliziereinrichtung (28) zum Multiplizieren der korrigierten Summendaten

$$((U-U_0) \cos θ+(V-V_0) \sin θ)$$

mit einem Wert −e (e>0) sowie eine Addiereinrichtung (47), die das Ausgangssignal der Quadriereinrichtung und das Ausgangssignal der Multipliziereinrichtung addiert, so daß sie ein Ausgangssignal abgibt, das die genannte Größe des Schlüsselsignals bildet.

2. Farbgesteuerte Schalteinrichtung nach Anspruch 1, dadurch gekennzeichnet, daß die Einrichtung zur Erzeugung ferner folgende Teile ausweist:

eine Einrichtung (25, 26, 42) zur Umwandlung der Daten $(U-U_0) \sin θ$ und $(V-V_0) \cos θ$ in Daten $-(U-U_0) \sin θ$ und $-(V-V_0) \cos θ$ und

deren Addieren zum Erzeugen eines Ausgangssignals

$$(V-V_0) \cos θ-(U-U_0) \sin θ,$$

mit $θ=\tan^{-1} (V_0/U_0)$;

eine Einrichtung (24, 27, 41) zur Umwandlung der Daten $(U-U_0)$ und $(V-V_0)$ in Daten $(U-U_0) \cos θ$ bzw. $(V-V_0) \sin θ$ und deren Addieren zum Erzeugen eines Ausgangssignals

$$(U-U_0) \cos θ+(V-V_0) \sin θ,$$

eine Einrichtung (29) zum Multiplizieren des Ausgangssignals

$$(V-V_0) \cos θ-(U-U_0) \sin θ$$

mit 1/e und zum anschließenden Quadieren desselben,

eine Quadriereinrichtung (28) zum Quadrieren des Ausgangssignals

$$(U-U_0) \cos θ+(V-V_0) \sin θ,$$

eine Addiereinrichtung (47) zum Addieren des Ausgangssignals der Multipliziereinrichtung (29) und des Ausgangssignals der Quadriereinrichtung (28)

sowie Mittel (30) zur Erzeugung der Quadratwurzel auf der Grundlage des addierten Ausgangssignals, so daß ein Ausgangssignal der letztgenannten Einrichtung diese Größe ist.

3. Farbgesteuerte Schalteinrichtung nach Anspruch 1 oder 2, dadurch gekennzeichnet, daß die Einrichtung zur Erzeugung ferner folgende Teile aufweist:

eine Einrichtung (25, 26, 42) zur Umwandlung der Daten $(U-U_0)$ und $V-V_0$ in Daten $-(U-U_0)$ sin $\theta$ bzw. $(V-V_0)$ cos $\theta$ und zu deren Addieren zum Erzeugen eines Ausgangssignals

$$(V-V_0) \cos \theta - (U-U_0) \sin \theta,$$

mit $\theta = \tan^{-1} (V_0/U_0)$,

eine Einrichtung (24, 27, 41) zur Umwandlung der Daten $(U-U_0)$ und $(V-V_0)$ in Daten $(U-U_0)$ cos $\theta$ bzw. $(V-V_0)$ sin $\theta$ und zu deren Addieren zum Erzeugen eines Ausgangssignals

$$(U-U_0) \cos \theta + (V-V_0) \sin \theta,$$

eine Einrichtung (29) zum Multiplizieren des Ausgangssignals der erstgenannten Umwandlungseinrichtung, die es quadriert und mit n multipliziert,

eine Einrichtung (28) zum Quadrieren des Ausgangssignals der zweitgenannten Umwandlungseinrichtung,

eine Einrichtung (47, 30) zum Addieren des Ausgangssignals der Multipliziereinrichtung und des Ausgangssignals der Quadriereinrichtung zur Bildung einer Quadratwurzel,

eine Multipliziereinrichtung (50) zum Multiplizieren des Ausgangssignals der zweitgenannten Umwandlungseinrichtung mit $-2$ und zum Addieren desselben zu dem Ausgangssignal der Addiereinrichtung (47, 30)

sowie eine Einrichtung (31) zum Multiplizieren des Ausgangssignals der letztgenannten Multipliziereinrichtung mit 1/n, so daß das Ausgangssignal dieser Einrichtung die genannten Größe bildet.

4. Farbgesteuerte Schalteinrichtung nach Anspruch 1, dadurch gekennzeichnet, daß die quadratische Funktion eine Ellipse ist.

5. Farbgesteuerte Schalteinrichtung nach Anspruch 1, dadurch gekennzeichnet, daß die quadratische Funktion eine Hyperbel ist.

6. Farbgesteuerte Schalteinrichtung nach Anspruch 1, dadurch gekennzeichnet, daß die quadratische Funktion eine Parabel ist.

7. Farbgesteuerte Schalteinrichtung nach Anspruch 1, dadurch gekennzeichnet, daß die quadratische Funktion ein Kreis ist.

8. Farbgesteuerte Schalteinrichtung nach einem der vorhergehenden Ansprüche, dadurch gekennzeichnet, daß die Einrichtung zur Erzeugung des Schlüsselsignals derart ausgebildet ist, daß sie Schlüsselsignale bildet, die entsprechend einer aus einer Mehrzahl solcher quadratischer Funktionen wählbaren Funktion bestimmt sind.

## Revendications

1. Appareil de commutation commandé par couleur agencé pour mélanger un premier signal vidéo avec un second signal vidéo en fonction d'un signal de commande et comprenant un dispositif générateur de signaux de commande agencé pour produire un signal de commande ayant une amplitude qui est déterminée par une relation quadratique prédéterminée avec la distance entre une teinte de référence et une teinte dudit premier signal vidéo, ledit dispositif générateur comprenant un dispositif (33, 34) pour dériver de données de coordonnées de point de teinte d'entrée (U, V) d'un signal de données vidéo d'entrée et de données de coordonnées de point de teinte de référence $(U_0, V_0)$, des premières et des secondes données de coordonnées de différence de couleur rapportées aux axes respectifs d'un système de coordonnées rectangulaires, un dispositif (25, 26, 42) destiné à élever au carré les premières et les secondes données de coordonnées de différence de couleur $(U-U_0, V-V_0)$ et à additionner le résultat de manière à produire une sortie additionnée

$$(U-U_0)^2 + (V-V_0)^2;$$

caractérisé en ce qu'il comporte en outre un dispositif destiné à produire la racine carrée de la sortie additionnée

$$(U-U_0)^2 + (V-V_0)^2,$$

un dispositif (24, 27, 41) destiné à multiplier respectivement lesdites premières et lesdites secondes données de coordonnées de différence par cos $\theta$ et sin $\theta$ et à additionner les résultats de manière à produire des données corrigées additionnées

$$(U-U_0) \cos \theta + (V-V_0) \sin \theta,$$

$\theta$ étant l'angle dont la tangente est les secondes données de coordonnées de point de teinte de référence divisées par les premières données de coordonnées de point de teinte de référence $(V_0/U_0)$; un dispositif (28) destiné à multiplier lesdites données corrigées additionnées

$$(U-U_0) \cos \theta + (V-V_0)$$

sin $\theta$ par $-e$ (e>0); et un dispositif (47) destiné à additionner une sortie dudit dispositif générateur de racine carrée avec la sortie dudit dispositif de multiplication de manière que la sortie dudit dernier dispositif d'addition mentionné soit ladite amplitude.

2. Appareil de commutation commandé par couleur selon la revendication 1, caractérisé en ce que ledit dispositif générateur comporte en outre: un dispositif (25, 26, 42) destiné à convertir lesdites données $(U-U_0)$ et $(V-V_0)$ en des données $-(U-U_0)$ sin $\theta$ et $(V-V_0)$ cos $\theta$ et à les additionner de manière à produire une sortie

$$(V-V_0) \cos \theta - (U-U_0)$$

sin $\theta$ où $\theta = Tg^{-1} (V_0/U_0)$; un dispositif (24, 27, 41) pour convertir lesdites données $(U-U_0)$ et $(V-V_0)$

en des données $(U-U_0) \cos \theta$ et $(V-V_0) \sin \theta$ respectivement et à les additionner de manière à produire une sortie

$$(U-U_0) \cos \theta+(V-V_0) \sin \theta;$$

un dispositif (29) pour multiplier ladite sortie $(V-V_0) \cos \theta -(U-U_0) \sin \theta$ par 1/e et à l'élever au carré; un dispositif (28) destiné à élever au carré ladite sortie

$$(U-U_0) \cos \theta+(V-V_0) \sin \theta;$$

un dispositif (47) destiné à additionner les données de sortie dudit dispositif de multiplication avec les données de sortie dudit dispositif d'élévation au carré; et un dispositif (30) destiné à produire la racine carré sur la base de ladite sortie additionnée de manière que la sortie dudit dernier dispositif mentionné soit ladite amplitude.

3. Appareil de commutation commandé par couleur selon la revendication 1 ou 2, caractérisé en ce que ledit dispositif générateur comporte en outre: un dispositif (25, 26, 42) destiné à convertir lesdites données $(U-U_0)$ et $(V-V_0)$ en des données $-(U-U_0) \sin \theta$ et des données $(V-V_0) \cos \theta$ et à les additionner de manière à produire une sortie

$$(V-V_0) \cos \theta-(U-U_0) \sin \theta$$

où $\theta=Tg^{-1} (V_0-U_0)$; un dispositif (24, 27, 41) destiné à convertir lesdites données $(U-U_0)$ et $(V-V_0)$ en des données $(U-U_0) \cos \theta$ et $(V-V_0) \sin \theta$ respectivement et à les additionner de manière à produire une sortie

$$(U-U_0) \cos \theta-(V-V_0) \sin \theta;$$

un dispositif (29) destiné à multiplier la sortie dudit premier dispositif de conversion mentionné, à l'élever au carré et à la multiplier par n; un dispositif (28) pour élever au carré la sortie dudit second dispositif de conversion mentionné; un dispositif (47, 30) destiné à additionner la sortie dudit dispositif de multiplication avec la sortie dudit dispositif d'élévation au carré de manière à produire une racine carrée; un dispositif (50) destiné à multiplier la sortie dudit second dispositif de conversion mentionné par $-2$ et à l'additionner avec la sortie dudit dispositif d'addition (47, 30) et un dispositif (31) destiné à multiplier la sortie dudit dernier dispositif de multiplication mentionné par 1/n de manière que la sortie dudit dispositif de multiplication soit ladite amplitude.

4. Appareil de commutation commandé par couleur selon la revendication 1, dans lequel ladite relation quadratique est élliptique.

5. Appareil de commutation commandé par couleur selon la revendication 1, dans lequel ladite relation quadratique est hyperbolique.

6. Appareil de commutation commandé par couleur selon la revendication 1, dans lequel ladite relation quadratique est parabolique.

7. Appareil de commutation commandé par couleur selon la revendication 1, dans lequel ladite relation quadratique est circulaire.

8. Appareil de commutation commandé par couleur selon l'une quelconque des revendications précédentes, dans lequel le dispositif générateur de signaux de commande est agencé pour produire des signaux de commande déterminés en fonction de l'une pouvant être sélectionnée de plusieurs desdites relations quadratiques.

F I G. 1

0 074 824

FIG. 2

FIG. 3A

FIG. 3C

FIG. 3E

FIG. 3B

FIG. 3D

FIG. 3F

2

FIG. 4

FIG. 5A
(K)

FIG. 5B
(KEY)

FIG. 5C
(KEY')

FIG. 6A

FIG. 6B

PL

BL

$(U_0, V_0)$

X

PL

BL

←t

FIG. 9A

FIG. 9B

PL

BL

$(U_0, V_0)$

X

PL

BL

←t

FIG. 7

FIG. 8A

FIG. 8B

FIG. 8C